# EUROPEAN PATENT SPECIFICATION

(11) **EP 2 630 839 B1**
(45) Date of publication and mention of the grant of the patent: **05.11.2014**
(21) Application number: 11776906.7
(22) Date of filing: 14.10.2011
(51) Int. Cl.: H05B 6/64, H05B 6/70

(54) **MICROWAVE OVEN**
MIKROWELLENOFEN
FOUR À MICRO-ONDES

(30) Priority: 18.10.2010 IT TO20100843
(43) Date of publication of application: 28.08.2013
(73) Proprietor: Indesit Company, S.p.A., 60044 Fabriano (AN) (IT)
(72) Inventor: GASPARETTI, Piergiorgio, I-60026 Numana (AN) (IT); GASPARINI, Alberto, I-60044 Fabriano (AN) (IT); GRAZIOSI, Serena, I-60021 Camerano (AN) (IT)
(74) Representative: Santonicola, Paolo
(86) International application number: PCT/IB2011/054557
(87) International publication number: WO 2012/052894

(56) References cited:
- EP-A1- 2 182 774
- EP-B1- 1 275 275
- WO-A1-2008/051053
- US-A- 3 522 550
- US-A- 4 133 997
- US-A1- 2009 283 516
- US-B1- 6 469 286

## Description

### [FIELD OF THE INVENTION]

The present invention relates to the field of microwave ovens, in particular to a microwave oven for household use, which may also be of the combined type. The present invention applies in particular to microwave ovens with cooking chambers having variable dimensions and shapes.

### [PRIOR ART]

It is known to use electromagnetic radiation at microwave frequencies for heating and cooking food, as described, for example, in patent application US 2,495,429 of 1945, titled "Method of treating foodstuffs", by inventor Percy L. Spencer.

Many household ovens are available on the market today which allow heating and cooking food by using microwaves. These ovens may also associate other cooking methods with microwaves, such as, for example, electric resistors or electric infrared generators.

The microwave ovens known in the art comprise a microwave generator - typically a magnetron - a magnetron power supply and control circuit, a cooking chamber with a cavity in which the foods are placed, and a waveguide.

When supplied with high-voltage current, the magnetron of a typical household microwave oven generates an electromagnetic field of microwaves at a frequency of 2,450 MHz (wavelength 12.24 cm), with a power output typically in the range of 800 W to 1.2 kW, which are then conveyed by the waveguide into the cooking chamber, where the microwaves are distributed by an antenna. The water, fats and carbohydrates contained in the food placed in the cavity of the cooking chamber absorb the energy of the microwaves in the form of heat, during a process called dielectric heating.

In order to obtain a uniform heating of the food and improve the efficiency of the microwave cooking process, it is necessary that the waveguide, the oven cavity and the antenna are so designed as to ensure a distribution as even as possible of the electromagnetic radiation inside the cavity itself.

In order to enhance food heating, it is known to use a rotary stirrer inside the cavity, arranged near the waveguide and the antenna, which improves the distribution of the microwaves within the cavity. Alternatively, it is conceivable to employ a fixed antenna in combination with a rotary dish arranged on the base of the cooking chamber, onto which the foods to be cooked can be laid.

However, the microwave ovens according to the solutions known in the art suffer from the drawback that they cannot always ensure an even distribution of the microwaves inside the cavity, sometimes leading to unsatisfactory cooking results.

As a matter of fact, the characteristics of the electromagnetic radiation are imposed by the magnetron, and therefore can hardly be modified. As a consequence, the characteristics of the waveguide and of the antenna are optimized in relation to parameters like microwave phase and wavelength for specific nominal operating conditions of the oven, which however may change in use.

For example, when particular foods or large containers are placed into the cooking chamber, or when the user changes the shape of the cooking chamber, e.g. by putting shelves into it, the operating conditions of the oven may change so much as to worsen the distribution of the microwaves within the cavity.

In short, the microwave ovens according to the known solutions cannot adapt themselves to dimensional variations of the cooking cavity.

This leads to a deterioration of the oven's performance, which is only partly limited by the presence of one or more rotary stirrer as previously described.

EP1275275 discloses a microwave oven comprising the features of the preamble of claim 1. In particular, according to EP1275275, a stub is positioned in the microwave to tune it. Once the optimal position of the stub is found with the aid of a network analyzer, the stub locked in that position.

### [OBJECTS AND SUMMARY OF THF INVENTION]

The object of the present invention is therefore to provide a microwave oven capable of solving some of the problems suffered by the prior art.

In particular, it is one object of the present invention to provide a microwave oven which ensures better food heating and cooking.

It is another object of the present invention to provide a microwave oven which ensures optimal performance in a plurality of operating conditions

finally, it is a further object of the present invention to provide a microwave oven whose cooking chamber can be modified in a flexible manner, as far as its shape and dimensions are concerned, according to the user's requirements, without jeopardizing its food heating efficiency.

These and other objects of the present invention are achieved through a microwave oven incorporating the features set out in the appended claims, which are intended as an integral part of the present description.

The general idea at the basis of the present invention is to provide a microwave oven comprising a cavity adapted to contain the food to be cooked, a magnetron for producing microwaves, and a waveguide that connects the magnetron to the cavity. The waveguide is associated with at least one movable stub for changing the transmission characteristics of the waveguide, and movement means are provided which are adapted to change the arrangement of the stub.

In this manner it is possible to modify the transmission characteristics of the waveguide and to optimize the distribution of the microwaves in accordance with the operating conditions of the microwave oven.

It follows that this solution allows to overcome some of the above-mentioned problems; in fact, it allows to improve the distribution of the microwaves inside the cavity of the food cooking chamber. Advantageously, food heating and cooking are improved.

Preferably, the stub can move longitudinally along a main axis within the waveguide to change the characteristics of phase analogy between the wave transmitted by the waveguide and the wave reflected inside the cooking cavity. This advantageously reduces the outer dimensions of the waveguide and of the movement means associated with the stub.

The waveguide is connected to an antenna at the end thereof facing the oven cavity, downstream of the stub. A rotary stirrer is preferably associated with the antenna inside the cooking cavity. This further improves the distribution of the microwaves within the oven cavity.

Further objects and advantages of the present invention will become more apparent from the following detailed description.

### [BRIEF DESCRIPTION OF THE DRAWINGS]

Some preferred and advantageous embodiments of the present invention will now be described by way of non-limiting example with reference to the annexed drawings, wherein:
- Fig. 1 shows an embodiment of a microwave oven according to the present invention.
- Fig. 2 is a detailed view of a first embodiment of a waveguide which can be used in combination with a microwave oven according to the present invention, including all the elements connected thereto.
- Fig. 3 is a sectional view of the assembly of Fig. 2.
- Fig. 4 is a detailed view of an embodiment of the antenna and rotary stirrer shown in Fig. 3.
- Fig. 5 is a detailed view of a second embodiment of a wave guide, exemplifying the means sensing the stub position.
- Fig. 6 is a sectional view of the assembly of Fig. 5.
- Fig. 7 is a detailed view of a third embodiment of a waveguide, showing a stub variant.
- Fig. 8 is a sectional view of the assembly of Fig. 7.
- Fig. 9 shows the microwave oven of Fig. 1, wherein a divider element has been inserted into the cooking chamber.
- Fig. 10 shows a detail of one of the switches arranged in the cooking cavity of the oven of Fig. 9.

The above-mentioned drawings show different aspects and embodiments of the present invention and, where appropriate, similar structures, components, materials and/or elements in the various drawings are designated by the same reference numerals.

### [DETAILED DESCRIPTION OF THE INVENTION]

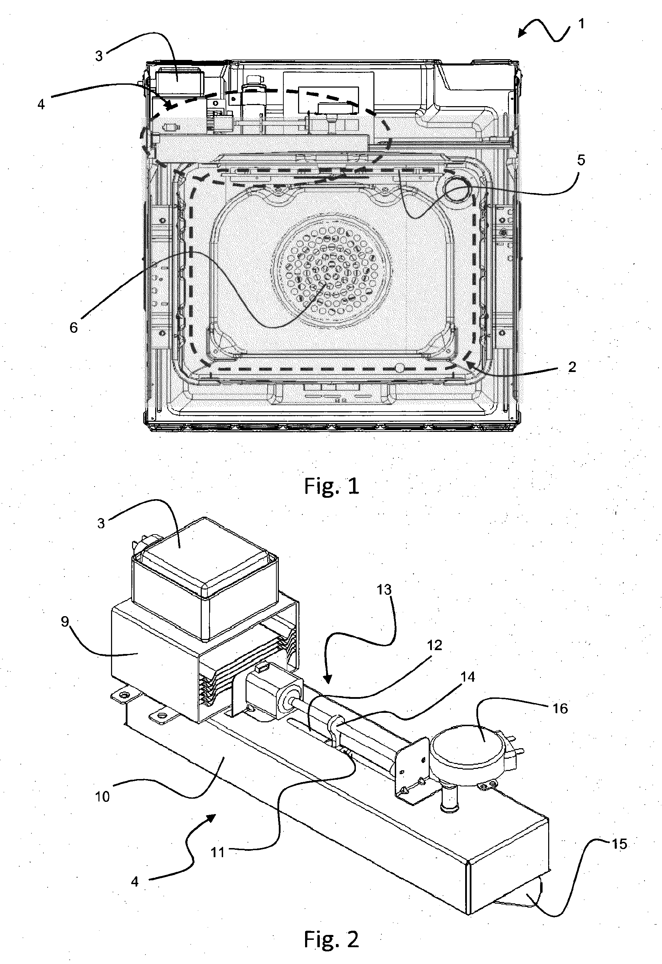

Fig. 1 shows an embodiment of an oven 1 according to the present invention. The oven 1 is viewed frontally, and lacks the front control panel and the front door allowing access to the cavity, thus showing the cooking chamber 2, highlighted by a dashed line, into which one can place food to be cooked.

According to the present invention, the oven 1 comprises a device for generating microwaves, preferably a magnetron 3. The oven 1 also comprises a transmission device 4, which suitably transmits the microwaves produced by the magnetron 3 into the cavity of the cooking chamber 2. The transmission device 4 and the characteristics thereof according to the present invention will be described in detail later on.

It must be pointed out that the present invention is applicable to a microwave oven, i.e. an oven comprising a device for generating microwaves and exploiting the effect of such microwaves to cook and heat food; this device is typically a magnetron. However, the present invention is not exclusively limited to microwave ovens, since it can also be applied to ovens, referred to as "combined" or "multifunctional" ovens, which also use other known cooking methods in addition to microwaves.

Therefore, in the example of Fig. 1 it is possible to appreciate the presence of an electric coil 5 heating the oven electrically, as well as a fan 6 (typically surrounded by another electric resistor, not shown in the drawing) covered with a suitable perforated end piece allowing ventilation of the oven. In addition, the oven 1 comprises a known steam cooking system.

It should also be understood that the oven 1 includes any other known elements required for its operation, such as, for example: a power supply, an electronic controller, safety devices, thermal and electric insulators, microwave shields such as wire grids, etc. These elements may however not be shown in the drawings, and will not be described herein for the sake of brevity.

Fig. 2 illustrates the magnetron 3 and the transmission device 4 in greater detail. The magnetron 3 preferably comprises a radiator 9, whose function is to dissipate the parasitic heat produced. A waveguide 10 is also coupled to the magnetron 3, which waveguide has a shape and is made of a material such as to allow for the transmission of microwaves, in accordance with predefined characteristics, to an antenna 19 (not shown in the drawing) that looks onto the cavity of the cooking chamber of the oven.

In this example, the waveguide 10 comprises a closed hollow boxed body, i.e. having thin walls that define a substantially closed space and having a substantially rectangular cross-section. As will become apparent below, the term "closed" must not be understood as "with no apertures", but rather as having geometrical and physical characteristics that prevent the microwaves from escaping from the inside of the boxed body.

The closed body of the waveguide 10 may be designed either as one piece or by using a plurality of sheet-metal components, which may even be shared with other elements of the oven, such as the metal plate that surrounds the cooking cavity 2.

The waveguide is preferably made of an electrically conductive metallic material, e.g. steel. It is clear that, depending on the material used for making the waveguide 10 and on the shape thereof, the waveguide's impedance characteristics will vary accordingly, thus affecting the transmission of the microwaves.

The transmission characteristics of the waveguide 10, in fact, modify the characteristics of the microwaves, such as wavelength and phase, which are diffused therein by the magnetron 3 to be subsequently collected by the antenna 19 and conveyed into the cooking chamber 2. According to the present invention, a stub 11 is associated with the waveguide 10. Said stub associated with the waveguide 10 provides an energy or uniformity adapter that modifies the transmission characteristics of the waveguide 10. Preferably, the stub 11 is contained within the waveguide 10.

Still in accordance with the present invention, the stub 11 is movable inside the waveguide 10, and its arrangement with respect to the waveguide 10 can be varied, thus changing the transmission characteristics of the waveguide 10 itself, even when the latter is installed inside the oven 1.

In this example, the waveguide 10 comprises, on its top face, an opening 12 whose dimensions are preferably such as to prevent any microwaves from escaping through it from the waveguide. Therefore, the major dimension of the opening 12 must be shorter than the wavelength of the microwaves' electromagnetic radiation. Preferably, for domestic applications with a 2,450MHz magnetron, the opening 12 has an elongated shape, with the greater dimension preferably shorter than 120 mm and the transversal dimension preferably shorter than 10 mm.

The stub 11 is mechanically connected to the movement means 13 through the link element 14. The movement means 13 are adapted to allow for controlled movement of the stub 11, so as to change its arrangement with respect to the waveguide 10. The movement means 13 are preferably adapted to control the movement of the stub with an accuracy up to a hundredth of a millimetre.

In this way it is possible to vary the transmission characteristics of the waveguide 10 to tune the microwave flow transmitted by the waveguide 10 and to optimize it in regard to the operating conditions being present in the cavity of the cooking chamber 2 of the oven 1, e.g. for the cavity dimensions.

In particular, the transmission characteristics of the waveguide 10 change the phase analogy between the wave transmitted by the magnetron 3 within the waveguide 10 and the wave reflected by the antenna 19 within the cooking cavity 2.

Preferably, at the end of the waveguide 10 opposite to the magnetron 3 there is an antenna 19, which picks up the microwaves flowing through the waveguide 10 and transmits them into the cooking cavity and onto the food to be cooked.

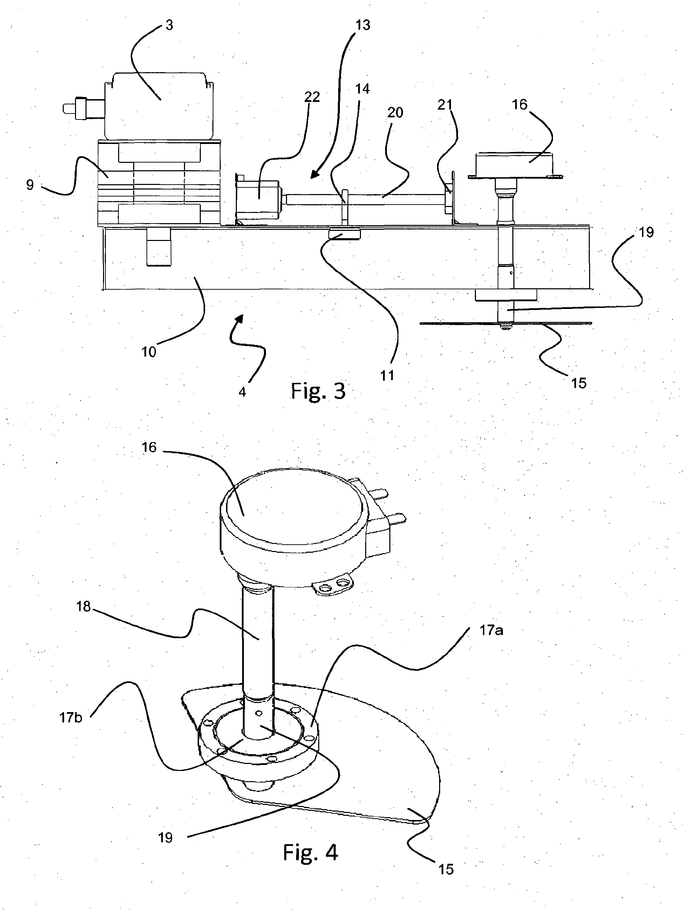

Fig. 3 is a sectional side view of the waveguide 10 of Fig. 2 that highlights the features of the stub 11 and the position of the antenna 19. In this example, the stub 11 is associated with the waveguide 10 in the proximity of the top side of the waveguide 10, thus creating an "open-loop" configuration with respect to the main transmission line of the waveguide 10. The stub 11 is made of conductive material, which may be the same material used for the waveguide 10. Furthermore, the stub 11 preferably has a rounded shape, i.e. with no sharp edges, to avoid the presence of any charge accumulation regions which might originate undesired electric arcs inside the waveguide. In addition, the stub 11 preferably has a very good surface finish, i.e. its roughness has been reduced by, for example, polishing.

As previously described, the position of the stub 11 is changed by the movement means 13, which move it longitudinally along the main axis of the waveguide 10.

Preferably, the movement means comprise a threaded shaft 20 carrying the link element 14, which is connected to the stub 11. The link element 14 also has a threaded hole coupled to the shaft 20; the shaft 20 is supported by the support 21 and by the motor 22. When the motor 22 is turning, the stub 11 translates longitudinally through the effect of the exchange of forces between the thread of the shaft 20 and the thread of the hole of the link element 14, which create a mechanical transmission.

In this embodiment, the position of the stub 11 relative to the waveguide 10 is preferably determined and controlled by taking into account the motor revolutions completed from a predetermined "zero" position, the thread pitch being known. The "zero" position may be stored, or the stub 11 may be returned to the "zero" position every time the oven is turned on.

An alternative embodiment of the stub movement means may also be conceived wherein the movement of the stub 11 is not limited to a linear translation, but includes a controlled rotation in addition to or as a replacement of said translation.

Fig. 4 shows in greater detail an example of embodiment of the antenna 19 and the stirrer 15 represented in Figs. 2 and 3. Preferably, the antenna 19 is mechanically connected to rotation means, e.g. supported by a support 17a constrained to the waveguide 10 and connected to a bushing 17b made of non-conductive material, preferably ceramic material, to insulate the antenna 19. Therefore, the rotation means allow the antenna 19 to rotate freely with respect to the support 17a. The antenna 15 is preferably connected to the rotary shaft 18, which in turn is connected to an electric motor 16. The rotary shaft 18 is also made of non-conductive material, preferably ceramic material, in order to insulate the antenna 19 from the electric motor 16.

When the motor 16 is switched on by the oven control and starts rotating, the stirrer 15 associated with the antenna 19 advantageously improves the distribution of the microwaves inside the cooking chamber.

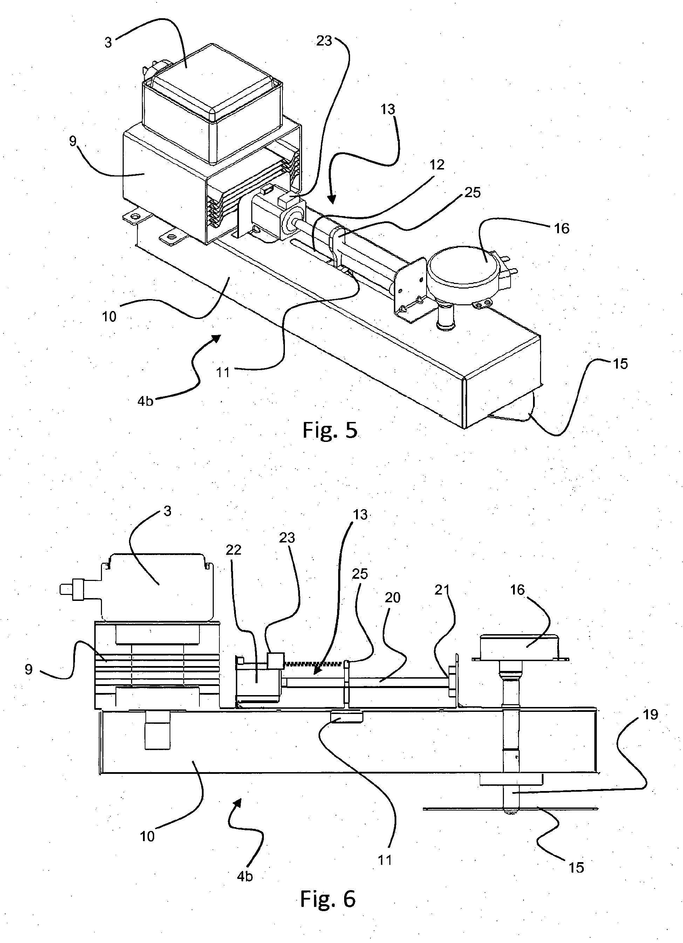

Fig. 5 shows a second embodiment of the transmission device 4b. In this example, the movement means 13 comprise a position sensor 23, preferably a contactless proximity sensor 23, e.g. an optical sensor, adapted to detect the position of the stub 12 by detecting the position of the link element 25 integral therewith. For this purpose, the upper portion of the link element 25 is raised to improve the reading of the sensor 23.

Fig. 6 is a sectional side view of Fig. 5, highlighting the range of the optical sensor 23 which allows the oven control to detect, whether at predetermined instants or instant by instant, the position of the stub 11 with respect to the waveguide 10, thus controlling its movement in operation through the movement means 13.

With reference to this and the previous embodiments, the position of the stub 11 can be set to discrete positions, according to a predetermined number of configurations which are controlled by the movement means 13.

As an alternative, it is conceivable to provide a continuous adjustment of the position of the stub 11, in particular in combination with the embodiment that comprises the optical sensor 23.

In order to ensure an effective continuous adjustment of the stub position, the reading of a microwave sensor (not shown) is preferably used, which sensor is located in the cooking cavity 2 and is adapted to detect at least one characteristic of the microwaves in the cavity, e.g. their phase or frequency.

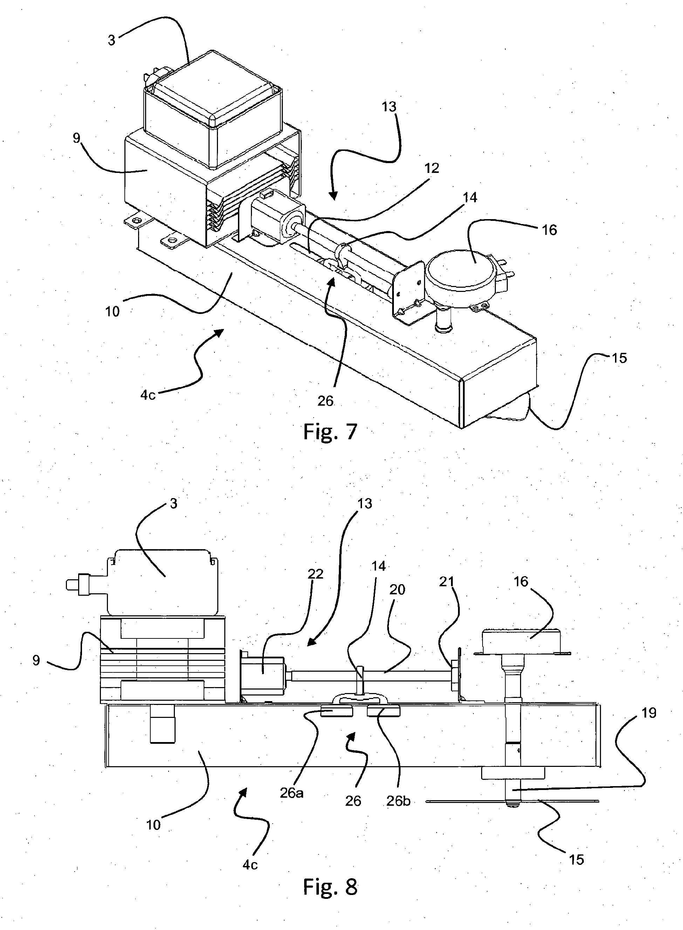

Fig. 7 shows the same view as Figs. 2 and 5, wherein a variant of the stub 26 is arranged in and associated with the waveguide 10. In this alternative embodiment, the stub 26 comprises two separate bodies 26a and 26b, connected together by the link element 14. Preferably, the bodies 26a and 26b are symmetrical relative to the link element 14; this symmetry of the bodies 26a and 26b of the stub 26 advantageously improves the stub's balance as regards the modification of the transmission characteristics of the waveguide 10.

Furthermore, in this manner both bodies 26a and 26b of the stub 26 are constrained to the same movement. This alternative embodiment allows to modify in yet a different manner the transmission properties of the waveguide 10, so as to improve the distribution of the microwaves within the cavity.

In fact, the transmission characteristics of the waveguide change as a consequence of modifications to the stub's shape or material; however, according to the present invention there is still the possibility of modifying at any time the general transmission characteristics of the waveguide by changing the arrangement of the stub inside of it.

Fig. 8 is a sectional view of the elements represented in Fig. 7, and permits to appreciate the mutual arrangement of the bodies 26a and 26b of the stub 26. The bodies 26a and 26b can be integrally translated by the movement means 13 while keeping the same mutual distance, set by the link element 14. In an alternative embodiment, inside the waveguide there may be multiple stubs, even different ones, the arrangement of each of which can be varied independently, e.g. through separate drive mechanisms, such as two separate motors and two separate transmissions or guides.

The microwave oven described so far allows changing in operation the transmission characteristics of the waveguide that conveys the microwaves into the cooking chamber.

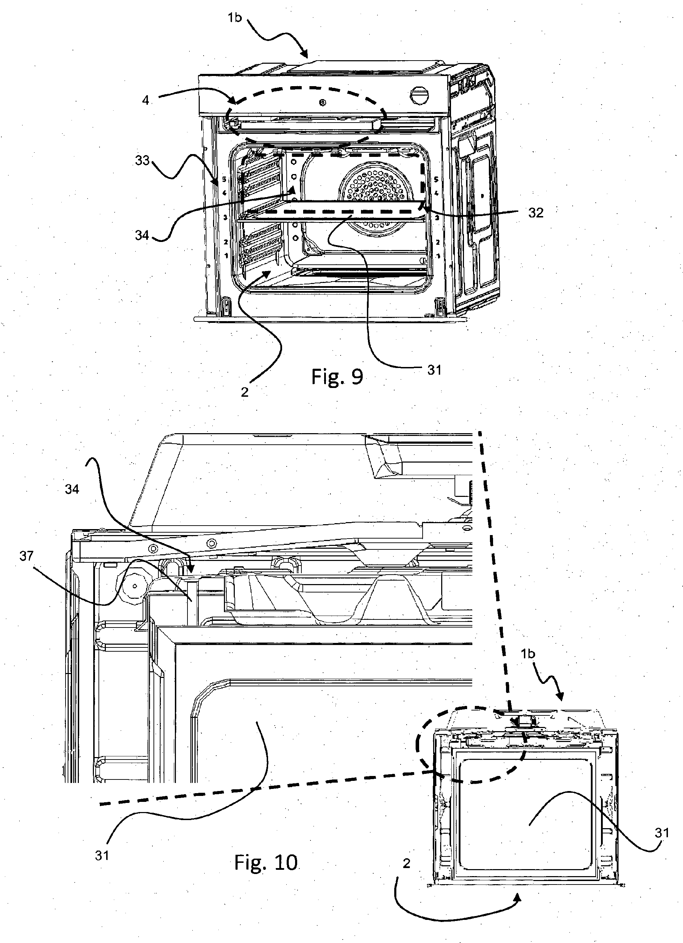

Fig. 9 illustrates an example of a situation in which the present invention finds an advantageous application, i.e. a microwave/combined oven 1b comprising a microwave transmission device 4 in accordance with the present invention (only partially visible in the drawing).

The oven 1b is such that it allows a divider element 31, e.g. a metallic tray, to be placed into the cooking chamber 2. This divider element 31 is adapted to delimit an upper portion of the chamber 2, where the microwaves stay confined, and which therefore acts as a microwave propagation cavity 32.

The addition of a divider element 31 is particularly advantageous in a combined oven, because it allows to change the volume of the cavity of the cooking chamber in which the food is heated.

For example, the divider 31 may be inserted and constrained to suitable guides in five different configurations, designated by reference numeral 33. Among these positions, there are two upper positions, one intermediate position and two lower positions, corresponding to five different height levels of the divider 31.

The maximum number of configurations 33 may be set when designing the oven 1b as a function of the volume of the cooking cavity 32. The different configurations 33 can be obtained by placing the same divider on different guides at different heights, or by placing differently shaped dividers on the same guide (e.g. including oven accessories like shelves or boxes).

For example, if the oven must be used in electric or steam mode for large quantities of food, such as roast meat or baked pasta, the divider can be set to the lower configurations, thus obtaining a large volume to contain the food. Otherwise, in typical conditions of use, the divider 31 can be placed into the intermediate position as shown in Fig. 5: Finally, for particular requirements, such as warming savoury pies, the divider can be set to the upper configurations, thus limiting the volume reserved for the food.

Since moving the divider 31 means changing the dimensions of the cavity 32 in which the microwaves must be distributed, when this cooking mode is used it is necessary to tune the microwaves diffused by the antenna (or anyway by the waveguide) to the characteristics of the cavity 32 in order to attain the best food heating results.

It is known that, in fact, in order to effectively heat the food contained in the oven cavity, the power delivered into the cavity being equal, the microwaves must have a wavelength suitable for heating the food molecules and must also be compatible with the modes of the cavity in which the microwaves are diffused, such modes being defined mainly by the geometry of the cavity and of the elements arranged inside the cavity or in the peripheral regions thereof.

According to the present invention, it is therefore possible to modify the characteristics of the microwaves diffused in the cavity 42 by changing the arrangement of a stub within the waveguide of the microwave oven. One can thus tune the microwaves to make them compatible with the modes of the cavity 32, i.e. to cause the microwaves to interfere with one another in a constructive manner, so as to improve the heating efficiency.

Prior to using the oven 1b for cooking, the user can decide where to position the divider 31. The position of the divider 31 therefore corresponds to an optimal arrangement of the stub inside the waveguide.

Preferably, the control of the oven 1b detects the configuration 33 of the divider 31 through the switches 34, which are activated by the presence of the divider 31. As an alternative to the switches 34, the user may specify the chosen configuration manually, e.g. through a selector, such as a knob. In this case, advantageously, the magnetron cannot be activated if the user has not previously selected any configuration.

The electronic control of the oven 1b, knowing the configuration 33, then modifies the arrangement of the stub so that the transmission characteristics of the waveguide are such as to diffuse microwaves tuned to the cavity 32.

For example, the various positions of the stub 11, corresponding to the various configurations 33 of the divider 31, can be defined beforehand and stored into the memory of the electronic control of the oven 1b. The optimal positions of the stub, in fact, can be found through experimental testing during the oven design stage.

Alternatively, according to a more flexible, though more complex, variant, microwave sensors (not shown) are employed in the cavity 32 to detect at least one characteristic of the microwaves being diffused therein, such as their frequency, and to control, in a closed-loop system, the arrangement of the waveguide's movable stub, as previously described.

Fig. 10 shows a detailed sectional top view of the oven 1b of Fig. 9. In this view, which represents a preferred embodiment, one can appreciate the interaction between the divider element 31 and one of the switches 34 when the divider element has been inserted in the cavity 2.

In this example, the divider element 31 comprises a projecting cylindrical body 37, located on the edge of the divider element 31 to be inserted towards the rear wall of the cavity 2. This projecting body 37, also referred to as "piston", is adapted to enter into a suitable seat and engage the contact of the switch 34 when the divider element 31 is in a particular position. The signal sent by the switch 4 when the projecting body 37 is within the seat allows the oven control to detect the presence and the current position of the divider element 31, preferably controlling the stub movement accordingly. It must be pointed out that the present invention is advantageously applicable not only to microwave ovens where the dimensions of the cavity can be modified by the user, but also to any microwave oven in general in order to adapt to variable characteristics of the cooking cavity, for example due to particular foods or bulky containers.

According to one embodiment of the present invention, when a low-power cooking mode is selected either manually by the user or automatically by the oven's microcontroller, the average power delivered into the cavity can be reduced by operating the magnetron in pulsed mode.

For example, if the microwave oven has a rated power of 1,100 W, and a power of 700 W is needed for cooking food, the oven control will supply the magnetron at full power over time pulses covering approximately 64% (i.e. 700/1,100=0.64) of the total operating time. According to an alternative embodiment of the present invention, an inverter is used to convert the mains frequency into a variable frequency, preferably in the range of 20 kHz to 45 kHz. In this manner, the output power of the magnetron is controlled linearly, and one can accurately select the power level to be used while operating the magnetron without solution of continuity through the whole food heating cycle. This alternative embodiment is particularly advantageous when used in combination with the teachings of the present invention, in that the transmission characteristics of the microwave oven's waveguide can be tuned by changing the position of the movable stub. It is thus possible to optimize the characteristics of the microwaves in accordance with the selected magnetron power level, improving as a result the distribution of the microwaves inside the cooking chamber and hence the cooking of the food.

It is apparent that many other changes may be made to the present invention by those skilled in the art without departing from the protection scope thereof as stated in the appended claims.

For example, it is clear that many different solutions may be employed for the stub movement means, such as, for example, rack-type mechanisms, pulley-type mechanisms, rod-crank kinematic systems, or other linkages.

With suitable technical measures, the present invention is also applicable to different types of ovens, whether combined or not, so long as microwaves are used, as well as to ovens having different power ratings and dimensions.

## Claims

1. A microwave oven (1, 1b) comprising a cavity (2, 32) adapted to contain foods to be cooked, a device (3) for producing microwaves and a waveguide (10) that connects said device (3) for producing microwaves to said cavity (2, 32), and a removable divider element (31) adapted to be inserted into said cavity (2) of said oven (lb) so as to delimit a volume of said cavity (2) facing said waveguide (10), wherein at least one movable stub (11) is further associated with said waveguide (10) for changing the transmission characteristics of said waveguide (10), and wherein the oven further comprises movement means (13) adapted to change the arrangement of said at least one stub (11), **characterised in that**
said movement means (13) are adapted to change the arrangement of said at least one stub (11) depending on the presence and/or position of said divider element (31).

2. A microwave oven according to claim 1, wherein said movement means (13) are operationally connected to at least one sensor (34) adapted to detect the presence of said divider element (31) in at least one position (33), said at least one sensor (34) being preferably a switch, and said divider element (31) being preferably adapted to mechanically interact with said switch (34) by changing the state thereof.

3. A microwave oven according to claim 2, further comprising a plurality of guides adapted to house said divider element (31), and wherein said at least one sensor (34) is positioned at said guides.

4. A microwave oven according to claim 1, wherein an electronic control of the oven detects the presence and/or position of the divider from a selector adapted to be operated by a user.

5. A microwave oven according to any one of claims 1 to 4, wherein said waveguide (10) comprises a closed boxed body adapted to house said stub (11) internally, and wherein said movement means (13) are adapted to translate said stub (11) within said closed boxed body.

6. A microwave oven according to claim 5, wherein said movement means (13) comprise a motor (22) adapted to rotate a threaded shaft (20), and a link element (14) rigidly constrained to said stub (11) and mounted on said shaft (20) so that the rotation of said shaft (20) causes said link element (14) to translate along said shaft (20), and wherein said closed boxed body preferably comprises an opening (12) adapted to allow the through passage of said link element (14).

7. A microwave oven according to claim 6, wherein said stub (11) comprises two separate bodies (26a, 26b) connected together and symmetrical with respect to the link element (14).

8. A microwave oven according to any one of claims 1 to 6, wherein said stub (11) comprises at least one metallic body having a rounded shape, and preferably a polished surface.

9. A microwave oven according to one of claims 1 to 8, further comprising a sensor (23), preferably an optical sensor (23), operationally connected to said movement means (13) and adapted to detect the arrangement of said movable stub (11).

10. A microwave oven according to any one of claims 1 to 9, further comprising an antenna (19) coupled to said waveguide (lo), wherein said antenna (15) is directed towards said cavity (2,32) and is associated with a stirrer (15), said stirrer being mechanically connected to rotation means (16, 17a, 17b, 18) adapted to cause it to rotate inside said cavity (2,32).

11. A microwave oven according to any one of claims 1 to 10, wherein said device (3) for producing microwaves is a magnetron and wherein the oven further comprises power control means adapted to vary the power of said magnetron, wherein said power control means comprise at least one inverter, and **characterised in that** said power control means are operationally connected to said movement means (13) in order to change the arrangement of said at least one stub (11) depending on the power of said magnetron.

12. A microwave oven according to any one of claims 1 to 11, further comprising an antenna (19) adapted to pickup the microwaves flowing through the waveguide (10) and to transmit them into said cavity , and further comprising a stirrer (15) associated to the antenna (19) for improving distribution of the microwaves into said cavity.

13. A microwave oven according to any one of claims 1 to 12, further comprising combined heating means for foods, preferably electric resistors or steam generators.

## Patentansprüche

1. Mikrowellenofen (1, 1b) umfassend einen Hohlraum (2, 32), welcher dazu eingerichtet ist, zu kochende Speisen zu beinhalten, eine Vorrichtung (3) zur Erzeugung von Mikrowellen und ein Wellenleiter (10), welcher die Vorrichtung (3) zur Erzeugung von Mikrowellen und den Hohlraum (2, 32) verbindet, und ein entfernbares Trennelement (31), welches dazu eingerichtet ist, in den Hohlraum (2) des Ofens (1 b) eingesetzt zu werden, um ein Volumen des Hohlraums (2) zu begrenzen, welches zu dem Wellenleiter (10) weist, wobei wenigstens ein beweglicher Stumpf (11) ferner dem Wellenleiter (10) zugeordnet ist, um die Übertragungscharakteristik des Wellenleiters (10) zu verändern, und wobei der Ofen ferner Bewegungsmittel (13) umfasst, welche dazu eingerichtet sind, die Anordnung des wenigstens einen Stumpfs (11) zu verändern, **dadurch gekennzeichnet, dass** die Bewegungsmittel (13) dazu eingerichtet sind, die Anordnung des wenigstens einen Stumpfs (11) in Abhängigkeit der Anwesenheit oder/und Position des Trennelementes (31) zu verändern.

2. Mikrowellenofen nach Anspruch 1, wobei die Bewegungsmittel (13) mit wenigstens einem Sensor (34), welcher dazu eingerichtet ist, die Anwesenheit des Trennelementes (31) in wenigstens einer Position (33) zu erfassen, betriebsmäßig verbunden sind, wobei der wenigstens eine Sensor (34) vorzugsweise ein Schalter ist, und wobei das Trennelement (31) vorzugsweise dazu eingerichtet ist, mit dem Schalter (34) durch das Verändern dessen Zustands mechanisch zu interagieren.

3. Mikrowellenofen nach Anspruch 2, ferner umfassend eine Mehrzahl von Führungen, welche dazu eingerichtet sind, das Trennelement (31) aufzunehmen, und wobei der wenigstens eine Sensor (34) an den Führungen angeordnet ist.

4. Mikrowellenofen nach Anspruch 1, wobei eine elektronische Regelung / Steuerung des Ofens die Anwesenheit oder/und Position des Trenners von einer Auswahlvorrichtung, welche dazu eingerichtet ist, von einem Anwender bedient zu werden, erfasst.

5. Mikrowellenofen nach einem der Ansprüche 1 bis 4, wobei der Wellenleiter (10) einen geschlossenen Kastenkörper umfasst, welcher dazu eingerichtet ist, den Stumpf (11) intern aufzunehmen, und wobei die Bewegungsmittel (13) dazu eingerichtet sind, den Stumpf (11) innerhalb des geschlossenen Kastenkörpers zu verlagern.

6. Mikrowellenofen nach Anspruch 5, wobei die Bewegungsmittel (13) einen Motor (22), welcher dazu eingerichtet ist, einen Gewindeschaft (20) zu rotieren, und ein starr auf den Stumpf (11) begrenztes und an dem Schaft (20) angebrachtes Verbindungselement (14) umfassen, so dass die Rotation des Schaftes (20) das Verbindungselement (14) dazu veranlasst, sich entlang des Schaftes (20) zu verlagern, und wobei der geschlossene Kastenkörper vorzugsweise eine Öffnung (12) umfasst, welche dazu eingerichtet ist, den Durchgang des Verbindungselementes (14) zuzulassen.

7. Mikrowellenofen nach Anspruch 6, wobei der Stumpf (11) zwei getrennte Körper (26a, 26b) umfasst, welche miteinander verbunden und bezüglich des Verbindungselementes (14) symmetrisch sind.

8. Mikrowellenofen nach einem der Ansprüche 1 bis 6, wobei der Stumpf (11) wenigstens einen metallischen Körper, welcher eine abgerundete Form aufweist, und vorzugsweise eine polierte Oberfläche umfasst.

9. Mikrowellenofen nach einem der Ansprüche 1 bis 8, ferner umfassend einen Sensor (23), vorzugsweise einen optischen Sensor (23), welcher mit den Bewegungsmitteln (13) betriebsmäßig verbunden ist und dazu eingerichtet ist, die Anordnung des beweglichen Stumpfs (11) zu erfassen.

10. Mikrowellenofen nach einem der Ansprüche 1 bis 9, ferner umfassend eine mit dem Wellenleiter (10) gekoppelte Antenne (19), wobei die Antenne (19) in Richtung des Hohlraums (2, 32) gerichtet ist und einem Rührer (15) zugeordnet ist, wobei der Rührer (15) mit Rotationsmitteln (16, 17a, 17b, 18) mechanisch verbunden ist, welche dazu eingerichtet sind, ihn dazu zu veranlassen, sich innerhalb des Hohlraums (2, 32) zu rotieren.

11. Mikrowellenofen nach einem der Ansprüche 1 bis 10, wobei die Vorrichtung (3) zur Erzeugung von Mikrowellen ein Magnetron ist und wobei der Ofen ferner Leistungsregelungs- / -steuerungsmittel umfasst, welche dazu eingerichtet sind, die Leistung des Magnetrons zu variieren, wobei die Leistungsregelungs- / -steuerungsmittel wenigstens einen Inverter umfassen, und **dadurch gekennzeichnet ist, dass** die Leistungsregelungs- / -steuerungsmittel mit den Bewegungsmitteln (13) betriebsmäßig verbunden sind, um die Anordnung des wenigstens einen Stumpfs (11) in Abhängigkeit der Leistung des Magnetrons zu ändern.

12. Mikrowellenofen nach einem der Ansprüche 1 bis 11, ferner umfassend eine Antenne (19), welche dazu eingerichtet ist, die durch den Wellenleiter (10) strömenden Mikrowellen aufzunehmen und diese in den Hohlraum zu übertragen, und ferner umfassend einen der Antenne (19) zugeordneten Rührer (15), um die Verteilung der Mikrowellen in den Hohlraum zu verbessern.

13. Mikrowellenofen nach einem der Ansprüche 1 bis 12, ferner umfassend kombinierte Erwärmungsmittel für Speisen, vorzugsweise elektrische Widerstände oder Dampfgeneratoren.

## Revendications

1. Four à micro-ondes (1, 1b) comprenant une cavité (2, 32) adaptée pour contenir des aliments à cuire, un dispositif (3) de génération de micro-ondes et un guide d'onde (10) qui connecte ledit dispositif (3) de génération de micro-ondes à ladite cavité (2, 32), et un élément diviseur amovible (31) adapté pour être inséré dans ladite cavité (2) dudit four (1b) de façon à délimiter un volume de ladite cavité (2) faisant face audit guide d'onde (10), dans lequel au moins une embase mobile (11) est en outre associée audit guide d'onde (10) pour modifier les caractéristiques de transmission dudit guide d'onde (10), et dans lequel le four comprend en outre des moyens de déplacement (13) adaptés pour modifier l'agencement de ladite au moins une embase (11), **caractérisé en ce que**
lesdits moyens de déplacement (13) sont adaptés pour modifier l'agencement de ladite au moins une embase (11) selon la présence et/ou la position dudit élément diviseur (31).

2. Four à micro-ondes selon la revendication 1, dans lequel lesdits moyens de déplacement (13) sont reliés fonctionnellement à au moins un capteur (34) adapté pour détecter la présence dudit élément diviseur (31) dans au moins une position (33), ledit au moins un capteur (34) étant de préférence un commutateur, et ledit élément diviseur (31) étant de préférence apte à interagir mécaniquement avec ledit commutateur (34) en modifiant son état.

3. Four à micro-ondes selon la revendication 2, comprenant en outre une pluralité de guides aptes à loger ledit élément diviseur (31), et dans lequel ledit au moins un capteur (34) est positionné au niveau desdits guides.

4. Four à micro-ondes selon la revendication 1, dans lequel une commande électronique du four détecte la présence et/ou la position du diviseur à partir d'un sélecteur apte à être actionné par un utilisateur.

5. Four à micro-ondes selon l'une quelconque des revendications 1 à 4, dans lequel ledit guide d'onde (10) comprend un corps caissonné fermé apte à loger à l'intérieur ladite embase (11), et dans lequel lesdits moyens de déplacement (13) sont aptes à déplacer ladite embase (11) au sein dudit corps caissonné fermé.

6. Four à micro-ondes selon la revendication 5, dans lequel lesdits moyens de déplacement (13) comprennent un moteur (22) apte à mettre en rotation un arbre fileté (20), et un élément de liaison (14) fixé de façon rigide à ladite embase (11) et monté sur ledit arbre (20) de sorte que la rotation dudit arbre (20) amène ledit élément de liaison (14) à se déplacer le long dudit arbre (20), et dans lequel ledit corps caissonné fermé comprend de préférence une ouverture (12) apte à permettre le passage dudit élément de liaison (14).

7. Four à micro-ondes selon la revendication 6, dans lequel ladite embase (11) comprend deux corps séparés (26a, 26b) reliés entre eux et symétriques par rapport à l'élément de liaison (14).

8. Four à micro-ondes selon l'une quelconque des revendications 1 à 6, dans lequel ladite embase (11) comprend au moins un corps métallique ayant une forme arrondie, et de préférence une surface polie.

9. Four à micro-ondes selon l'une des revendications 1 à 8, comprenant en outre un capteur (23), de préférence un capteur optique (23), relié fonctionnellement auxdits moyens de déplacement (13) et apte à détecter l'agencement de ladite embase mobile (11).

10. Four à micro-ondes selon l'une quelconque des revendications 1 à 9, comprenant en outre une antenne (19) couplée audit guide d'onde (10), dans lequel ladite antenne (15) est dirigée vers ladite cavité (2, 32) et est associée à un agitateur (15), ledit agitateur étant relié mécaniquement à des moyens de rotation (16, 17a, 17b, 18) aptes à l'amener à entrer en rotation à l'intérieur de ladite cavité (2, 32).

11. Four à micro-ondes selon l'une quelconque des revendications 1 à 10, dans lequel ledit dispositif (3) de génération de micro-ondes est un magnétron et dans lequel le four comprend en outre des moyens de commande de puissance aptes à faire varier la puissance dudit magnétron, dans lequel lesdits moyens de commande de puissance comprennent au moins un onduleur, et **caractérisé en ce que** lesdits moyens de commande de puissance sont reliés fonctionnellement auxdits moyens de déplacement (13) afin de modifier l'agencement de ladite au moins une embase (11) selon la puissance dudit magnétron.

12. Four à micro-ondes selon l'une quelconque des revendications 1 à 11, comprenant en outre une antenne (19) apte à capter les micro-ondes circulant à travers le guide d'onde (10) et à les transmettre dans ladite cavité, et comprenant en outre un agitateur (15) associé à l'antenne (19) pour améliorer la répartition des micro-ondes dans ladite cavité.

13. Four à micro-ondes selon l'une quelconque des revendications 1 à 12, comprenant en outre des moyens combinés de chauffage pour des aliments, de préférence des résistances électriques ou des générateurs de vapeur.
